Europäisches Patentamt

European Patent Office

Office européen des brevets

(11) Publication number: **0 427 481 A2**

# EUROPEAN PATENT APPLICATION

(21) Application number: 90312054.1

(51) Int. Cl.⁵: **H04N 5/30**

(22) Date of filing: 02.11.90

(30) Priority: 07.11.89 GB 8925059

(43) Date of publication of application:
15.05.91 Bulletin 91/20

(84) Designated Contracting States:
AT BE CH DE DK ES FR GR IT LI NL SE

(71) Applicant: EEV LIMITED
106 Waterhouse Lane
Chelmsford, Essex, CM1 2QU(GB)

(72) Inventor: Moody, Michael Henry
30 Redgates Place
Chelmsford, Essex CM2 6BG(GB)

(74) Representative: Cockayne, Gillian et al
The General Electric Company plc Patent
Department GEC Marconi Research Centre
West Hanningfield Road
Great Baddow, Chelmsford Essex CM2
8HN(GB)

(54) **An imager.**

(57) An imager includes a housing 3 containing an objective lens arrangement 4, an image tube 2, an eyepiece 10 and a plurality of cells 12 located about an optical path 8, which extends from an output of the image tube 2 to the eyepiece 10. The location of the cells 12 enabling a compact convenient design of imager.

Fig 1D

Fig 1A

Fig 1B

Fig. 1C

2

# AN IMAGER

This invention relates to an imager, and more particularly, but not exclusively to an imager used for amplifying radiation received from a viewed scene in low light level conditions.

It is often desirable that such imagers are self contained units, not requiring an external power supply, and are of a compact lightweight design.

The present invention seeks to provide an improved imager which is particularly compact and convenient to use. According to a first aspect of the invention there is provided an imager comprising: an image tube arranged to receive radiation from a scene; a plurality of electrical cells for providing a power supply to the tube; and an aperture for viewing an output from the image tube, wherein the viewing aperture and output of the image tube define an optical axis about which the cells are arranged in a plane substantially perpendicular to the axis.

According to a second aspect of the invention there is provided an imager comprising: an image tube arranged to receive radiation from a scene; an electrical cell with an aperture therein for providing a power supply to the tube; and an output for viewing an output from the image tube, wherein the viewing aperture output of the image tube define an optical axis passing through the aperture in the cell.

An imager in accordance with the invention may be made particularly compact as the cell, or cells, can be positioned relatively close about the optical axis the only requirement being that there is sufficient area about the optical axis to enable output radiation from the image tube to pass unimpeded to the viewing aperture. As this area may be arranged to be relatively small compared to the diameter of the image tube, the diameter of the imager as a whole need not be governed by the power supply as in previous arrangements.

Preferably the imager includes a substantially cylindrical housing within which the cell or cells are located. This shape is particularly easy to handle and store, and is not prone to damage having no protrusions.

In one embodiment of the invention the imager comprises two sections, a first section housing an objective lens and the image tube, and the second section housing the aperture and the cell or cells. The two sections may be relatively rotatable, the relative position of the two sections controlling the power supply to the tube thereby eliminating the need for an external switch. In such an arrangement, and where there are a plurality of cells, it is preferable that the cells are separately connectable to the image tube, the imager including a plurality of contact regions, each region being associated with a respective different cell and forming part of the electrical path from the cell to the image tube. This enables each cell to be used in turn as the previous cell is exhausted, simply by rotating the first section relative to the second.

Preferably the imager comprises a momentary switch for activating the image tube, so that the tube is only operative while the switch is held in position. This overcomes problems associated with the image tube being left on when not in use, resulting in either the cells being unnecessarily drained, or damage to the image tube occurring when the tube is accidentally exposed to a bright light source in the belief that it has previously been switched off.

Two embodiments of the invention will now be described by way of example only with reference to the accompanying drawings in which:

Figure 1A is a longitudinal cross sectional view through an imager in accordance with a first embodiment of the invention;

Figure 1B illustrates one part of the imager depicted in Figure 1A;

Figure 1C is a schematic end view of the part of the imager of Figure 1B;

Figure 1D illustrates an equivalent part to that depicted in Figure 1B, employing a toroidal battery.

Figure 2A is a schematic sectional view of an imager in accordance with a second embodiment of the invention; and

Figure 2B is a section through line II-II of Figure 2A.

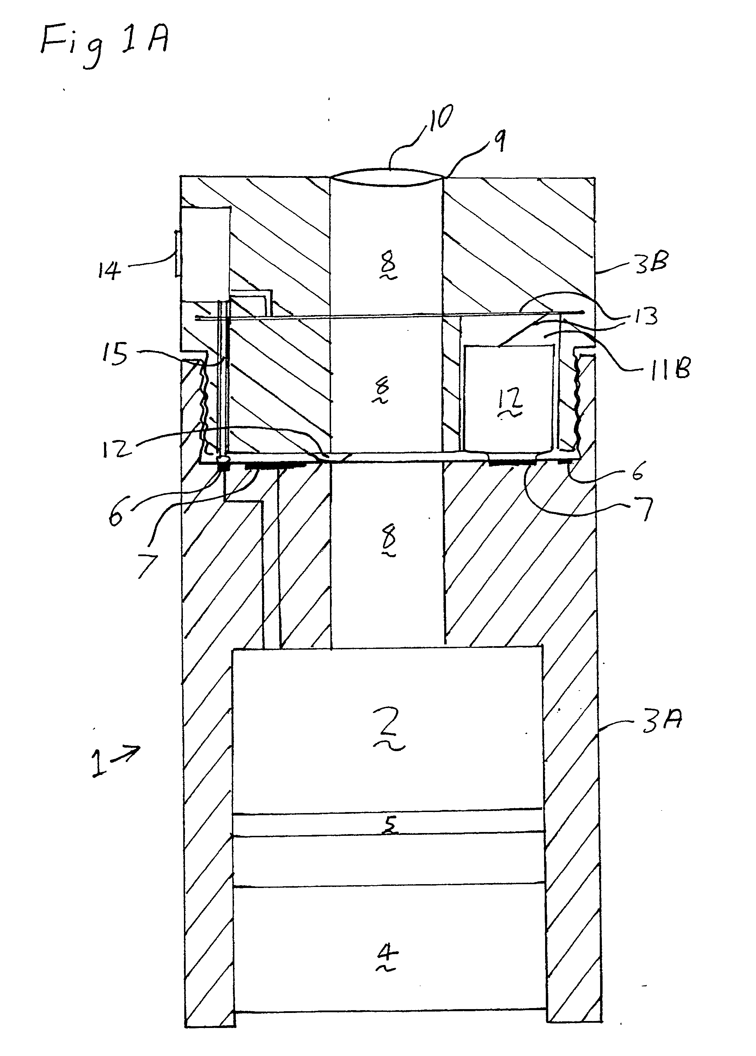

With reference to figure 1A an imager 1 for amplifying received light from a scene includes an image tube 2 located in a substantially cylindrical housing comprising two sections 3a and 3b. The first section 3a, which contains the image tube 2, also comprises an objective lens arrangement 4 for focusing received light on a sensor array 5 of the image tube 2, and electrical contacts 6 and 7 connected to the image tube 2.

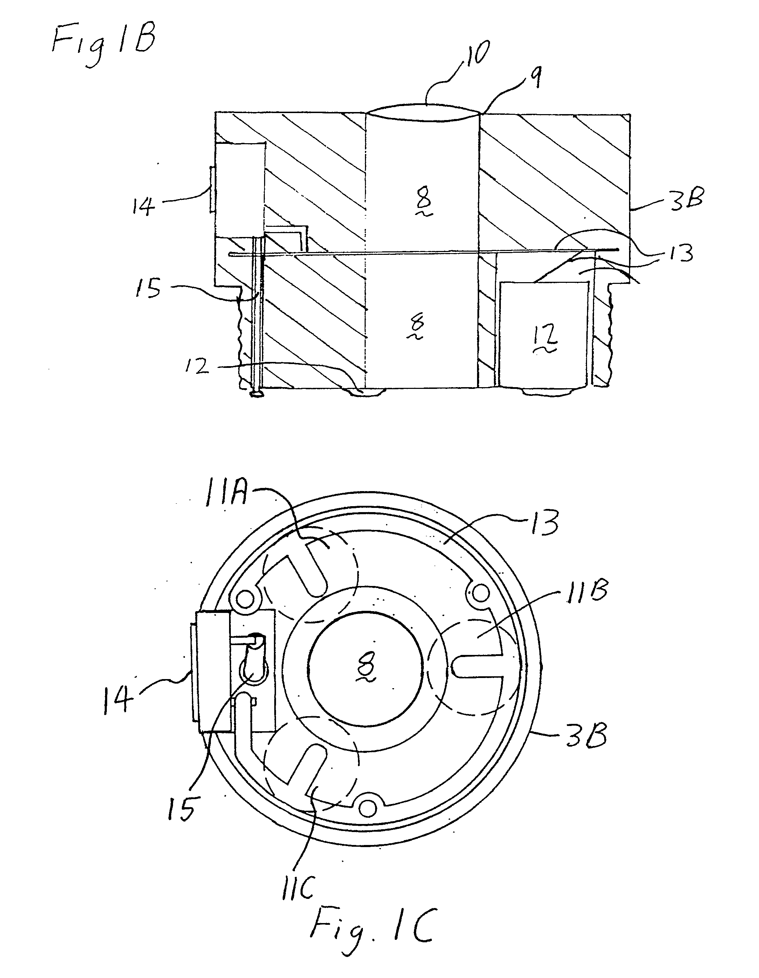

The second section 3b of the cylindrical housing 3 is illustrated separate from the first section 3a in figure 1B, and in plan viewing in figure 1C. This second section 3b comprises a viewing aperture 9, eyepiece lens 10 and three cell compartments 11a, 11b and 11c in which cells 12, (only one of which is shown), are inserted. The negative terminal of each cell is connected by conductor 13 to a momentary switch 14 mounted on the side of the section of the cylinder 3b. Pressure applied to the switch 14 activates the switch, for the duration for which the switch is depressed, such that it electrically connects the conductor 13 with contact pin 15.

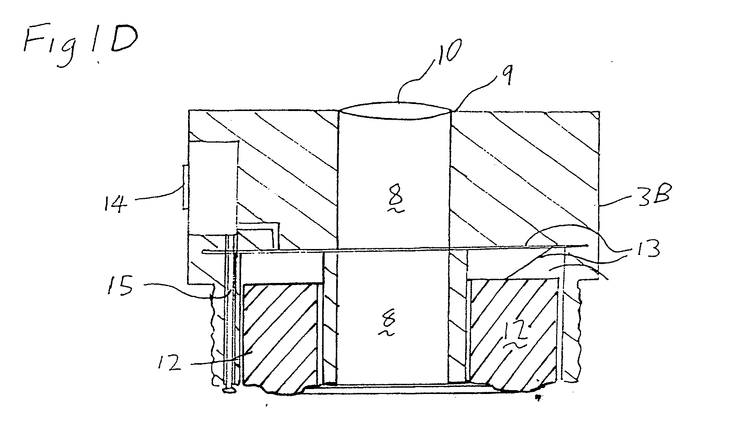

In Figure 1D an alternative arrangement of section 3B is illustrated, wherein a single toroidal cell has been substituted for the previous three cell arrangement of Figure 1B.

When the two sections of the imager are assembled, as shown in figure 1a, the positive terminal of the cell 12 is forced into contact with conductor 7 and likewise the contact pin 15 is forced into contact with conductors 6 also connected to the image tube 2. In this manner depression of the switch 14 completes a circuit such that the image tube 2 is actuated.

The assembled sections 3a and 3b and associated components of the imager 1 define a central volume 8 through which the output of the image tube is transmitted to the eyepiece lens 10. The optical axis being collinear with the longitudinal axis of the imager 1.

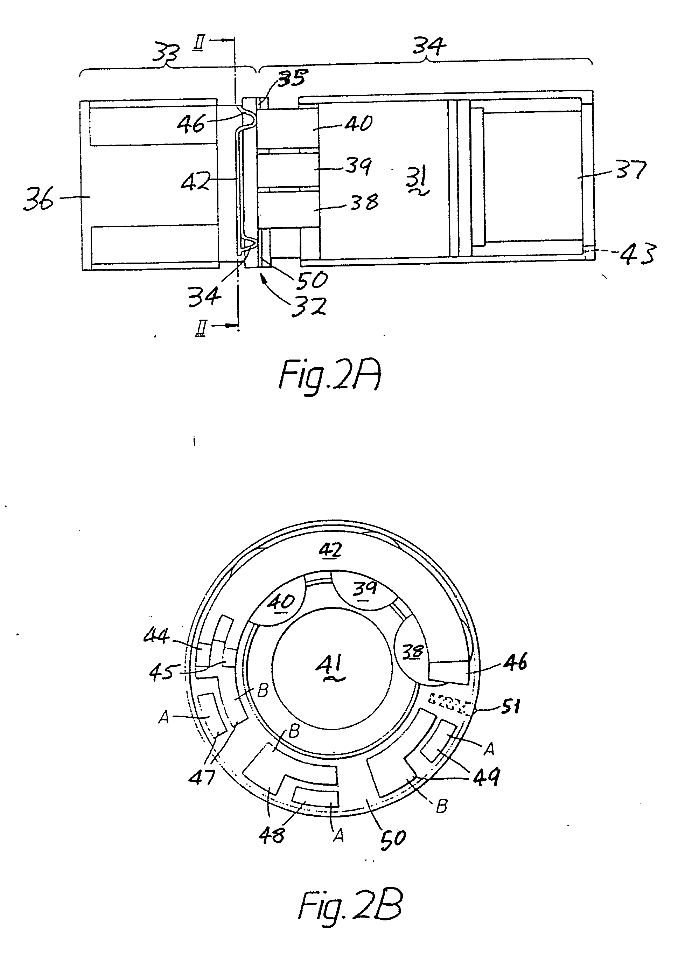

With reference to Figure 2a and 2b there is schematically illustrated an imager in accordance with the second embodiment of the invention. Figure 2 depicts an imager for amplifying received light from a scene and includes an image tube 31 contained within a generally cylindrical housing 32. The housing 32 comprises first and second relatively rotatable sections 33 and 34 respectively having a rotating joint between them. An eyepiece lens arrangement, through which an operator looks, is located in the first section 33. The image tube 31 and a front end lens arrangement 37 at which radiation from the viewed scene is received are housed within the second section 34. The power supply for the image tube 31 consists of three lithium cells 38, 39 and 40 of the type designated DL13N, however it will be realised that many cell types are available which would be equally suited to this application. The cells 38, 39 and 40 are contained within the second section 34 and are disposed around the periphery of the apparatus, as can be more clearly seen in Figure 28, the central region 41 being the viewing area through which the imaged scene is transmitted. A contact pad 42 is located within the first section 33 and is arranged to move with it such that, when the relative position of the first and second sections is changed, the contact pad 42 is moved with respect to the cells 38, 39 and 40, thus controlling the power supply to the image tube 31. An LED 43 is also included within the apparatus, being located at the front surface of the device so that, when it is switched on, it illuminates the viewed scene with infra-red radiation.

The cells 38, 39 and 40 and the contact pad 42 are arranged so that one cell at a time is used to power the image tube 31. The contact pad 42 is a semi-annular plate having contact portions 44, 45 and 46 at its ends. One of the contact portions 16 extends entirely across the end of the contact plate 42 and is bent towards the cells 38, 39 and 40 such that when it is positioned adjacent to a cell it makes an electrical connection therewith. The other end of the contact pad 42 is split into two contact portions 44 and 45. Contact regions 47, 48 and 49 are laid down on a board 50 located in the second section 34, each including two parts A and B. The larger part A is connected to the image tube 31 and the smaller part B provides an electrical path to the LED 43. The two contact portions 44 and 45 of the contact pad 42 are arranged to make contact with a region when immediately adjacent to it and thus provide a conductive path from a cell to the image tube 31 and/or LED 43. Thus, in the position shown, the first cell 38 is connected via contact portion 46 and the contact pad 42 to the contact region 47. Both contact portions 44 and 45 connect with the larger part of the region A and therefore the image tube is switched on but the LED is off. If the contact pad is rotated anti-clockwise with respect to the second section 34 the contact portions 44 and 45 come into contact with portions B and A respectively of the first contact region 47, thus energising the LED as well as providing power to the image tube 31. As the contact pad 42 is rotated further in an anti-clockwise direction, the cell 38 is switched out of use and the second cell 39 is switched on. Again, this may be used to power the image tube 31 alone or to provide power to the LED as well. A spring and ball locator 51 is included to give a positive indication at each available position, including the off position.

The front end lens arrangement 37 includes a threaded portion on its outer surface which engages with the housing 32, enabling it to be readily removed for either replacement with another arrangement or for access to the image tube 31 or to the cells 38, 39 and 40. The apparatus may also include an aperture control so as to give optimum performance of the image tube 31 under a variety of operating conditions.

## Claims

1. An imager (1) comprising: an image tube (2) arranged to receive radiation from a scene; a plurality of electrical cells (12) for providing a power supply to the tube (2); and an aperture (9) for viewing an output from the image tube (2), wherein the viewing aperture (9) and output of the image tube define an optical axis, about which the cells (12) are arranged in a plane substantially perpendicular to the axis.

2. An imager as claimed in claim 1 wherein each cell is substantially the same distance from the axis as each other cell.

3. An imager as claimed in claim 1 wherein the cells are substantially equidistantly spaced about the optical axis.

4. An imager as claimed in any preceding claim wherein cells are separately connectable to the image tube.

5. An imager as claimed in claim 4 including a plurality of contact regions, each region being associated with a respective different cell and forming part of an electrical path from the cell to the image tube.

6. An imager (1) comprising: an image (2) tube arranged to receive radiation from a scene; an electrical cell (12) with an aperture therein for providing a power supply to the tube (2); and an aperture (9) for viewing an output from the image tube, wherein the viewing apperture and output of the image tube define an optical axis passing through the aperture in the cell.

7. An imager as claimed in any preceding claim comprising an objective lens arrangement for focussing radiation from a scene onto the input of the image tube.

8. An imager as claimed in any preceding claim which includes a substantially cylindrical housing, within which the cell or cells are located.

9. An imager as claimed in claim 8 wherein the optical axis is collinear with the longitudinal axis of the cylinder.

10. An imager as claimed in any preceding claim comprising two sections, a first section housing an objective lens and the image tube, and the second section housing the aperture and the cell or cells.

11. An imager as claimed in claim 10 wherein the two sections are relatively rotatable, the relative position of the two sections controlling the power supply to the tube.

12. An imager as claimed in claim 10 or 11 wherein the cell or cells are contained in one of the sections and a contact in the other, rotation between the two bringing the contact into electrical connections with a cell or cells.

13. An imager as claimed in any preceding claim comprising a momentary switch for activating the image tube.

# Fig 1A

EP 0 427 481 A2

Fig 1B

Fig. 1C

Fig 1 D

Fig.2A

Fig.2B